# EUROPEAN PATENT APPLICATION

(11) **EP 1 970 818 A1**
(43) Date of publication of application: **17.09.2008**
(21) Application number: 06840582.8
(22) Date of filing: 13.12.2006
(51) Int. Cl.: G06F 17/21

(54) **PROCESSING METHOD OF ENHANCING OPENING SPEED OF CHARACTER PROCESSING DOCUMENT**

(30) Priority: 15.12.2005 CN 200510131861
(71) Applicant: Wuxi Evermore Software, Inc, Wuxi Jiangsu 214028 (CN)
(72) Inventor: XU, Wenping, Jiangsu 214028 (CN)
(74) Representative: Price, Nigel John King
(86) International application number: PCT/CN2006/003392
(87) International publication number: WO 2007/068204

(57) **Abstract**

A processing method for increasing speed of opening a word processing document includes: reading a data content of a word processing document; reading typeset information of a page stored in the word processing document and obtaining paragraph information and object information of the page; according to the paragraph information and object information of the page, loading the data content of the page, generating and displaying the typeset content. The processing method performs reading of the typeset information of a document and the conventional data contents at the same time.

## Description

### FIELD OF THE TECHNOLOGY

The present invention relates to a word processing method of office software, especially to a processing method for increasing speed of opening a word processing document.

### BACKGROUND OF THE INVENTION

In office software, for the part of word processing, it is generally needed to configure formatting information, e.g. various paragraph attributes, according to the words input by users and the defined page size and font size. It is also needed to perform some typeset and layout according to contents such as various inserted objects, the formatting information of the objects and so on in order to demonstrate the information expressed by the users.

In order to re-exhibit the current information of a user or intercommunicate with other users, the user needs to store the content completed every time so as to recover it when needed. For all the existing word processing software only store the content and formatting information input by a user when performing storing , when the user needs to open the document once again and demonstrate the information expressed or intercommunicated for the file, the software needs to read the stored content and the corresponding formatting information and then perform re-typeset of the content of the document according to the content and the corresponding formatting information by the previous regulation of typeset and layout so as to form our What You See Is What You Get document format.

Based on the above actuality, on opening a word processing document and especially on opening a word processing document with many contents and plentiful formatting information, it is needed to re-calculate the information and parameter of the typeset and layout of the word processing document. Specifically speaking, when the word processing software needs to demonstrate the content and style of some page of the document, it has to perform calculation and typeset for the corresponding document and record from which word in which paragraph the beginning line of the page starts and various object information thereof, and perform typeset according to the above information. If the word processing software does not make the above record, when it is need to transfer from the currently displayed document page directly to another page needing to be processed, e.g. jumping from page 820 to page 1000, the typeset must be performed from page 1 all through the page to be transferred to. Only by doing so, it can be known which character in the beginning paragraph and the paragraph of that page needs to be displayed and which object needs to be displayed and only after this can perform practical display processing. Although the computer hardware with the highest operation speed currently is used to make the typeset of each page only spend one centisecond or less, if it is needed to process a document with big data quantity, e.g. a file with 1000 pages, the processing time spent in loading all the data to a memory and performing calculation is also considerable. Therefore, when a user of word processing software opens such a big file, the user has to wait for a long time to see the page content and style which he can see and needs to see and then perform a next operation of editing or modification. The deficiency of the prior art results in waste of the user's precious time and may severely influences the user working efficiency

### SUMMARY OF THE INVENTION

In connection with the technical problem that a user has to spend a lot of time waiting for the calculation typeset in prior art, the object of the present invention is to provide a processing method for increasing speed of opening a word processing document. Especially with regard to the word processing document with many contents and plentiful formatting information, the present invention can enable the user to see the needed content and typeset style immediately after opening a document and perform operations of editing, modifying and so on at once.

In order to implement the above object, the present invention provides a processing method for increasing the speed of opening a word processing document the processing method includes:

Step A, reading a data content of a word processing document;

Step B, reading typeset information of a page stored in the word processing document and obtaining paragraph information and object information of the page;

Step C, according to the paragraph information and object information of the page, loading the data content of the page and generating a typeset content of the page; and

Step D, displaying the typeset content.

The step B may specifically include:

Step B1, loading a page of the word processing document;

Step B2, reading the typeset information of the page, obtaining the paragraph information and object information of the page;

Step B3, judging whether there is an unread page, if there is an unread page, executing the step B1; otherwise, executing step B4; and

Step B4, ending.

In the above technical solution, between the steps B2 and B3, the processing method may further include: step B21, reading page header information of the page and the paragraph information and object information thereof. The processing method may also include: step B22, reading page footer information of the page and the paragraph information and object information thereof. The processing method may also include: step B23, reading column information of the page and the paragraph information and object information thereof.

The step B21 may specifically include:

Step B211, judging whether the page has a page header, if the page has no page header, executing step B 215; otherwise, executing step B212;

Step B212, reading the page header information;

Step B213, judging whether there is paragraph information and object information, if there is no paragraph information and object information, executing step B215; otherwise, executing step B214;

Step B214, reading the paragraph information and object information, and returning back to the step B213; and

Step B215, ending the reading of the page header information.

The step B22 may specifically include:

Step B221, judging whether the page has a page footer, if the page has no page footer, executing step B225; otherwise, executing step B222;

Step B222, reading page footer information;

Step B223, judging whether there is paragraph information and object information, if there is no paragraph information and object information, executing step B225; otherwise executing step B224;

Step B224, reading the paragraph information and object information; and returning back to the step B223; and

Step B225, ending the reading of the page footer information.

The step B23 may specifically include:

Step B231, judging whether the page has unread column information, if the page has no unread column information, executing step B235; otherwise, executing step B232;

Step B232, reading the column information;

Step B233, performing a reading processing of the column information;

Step B234, executing the step B231; and

Step B235, ending the reading of the column information.

The step B233 performing the reading processing of the column information may specifically include:

Step E1, judging whether the column has unread paragraph information and object information, if the column has no unread paragraph information and object information, executing step E4; otherwise, executing step E2;

Step E2, reading the paragraph information and object information;

Step E3, returning back to the step E1; and

Step E4, ending the reading of the paragraph information and object information.

The step B233 performing the reading processing of footnote information in the column may specifically include:

Step F1, judging whether there is an unread footnote in the column, if there is no unread footnote, executing step F7; otherwise, executing step F2;

Step F2, reading the footnote information;

Step F3, judging whether there is paragraph information and object information, if there is no paragraph information and object information, executing step F6; otherwise, executing step F4;

Step F4, reading the paragraph information and object information;

Step F5, returning back to the step F3;

Step F6, returning back to the step F1; and

Step F7, ending the reading of the footnote information.

The step B233 performing the reading processing of endnote information in the column may specifically include:

Step G1, judging whether there is an unread endnote in the column, if there is no unread endnote, executing step G7; otherwise, executing step G2;

Step G2, reading the endnote information;

Step G3, judging there is paragraph information and object information, if there is no paragraph information and object information, executing step G6; otherwise, executing step G4;

Step G4, reading the paragraph information and object information;

Step G5, returning back to the step G3;

Step G6, returning back to the step G1; and

Step G7, ending the reading of the endnote information.

The above technical solution, while reading the paragraph information and object information, reads an ID identifying paragraph information and object information. Further more, the ID is the same as the ID quoted by computer memory.

The main idea of the present invention is to store suitably sufficient word processing typeset information at the same time when the word processing document performs conventional storing the content and formatting information. When the user opens the word processing document once again, the stored typeset information of a page combining with the content and formatting information in the word processing document is read at the same time. The word processing software does not need from-end-to-end re-typeset or re-layout but instead it can obtain the typeset content of each page in the document only by very simple calculation typeset taking a page as unit. The user can quickly obtain the What you Need Is What You See page typeset result and perform various normal operations and display at once.

The present invention creatively provides a technical solution for reading the typeset information of a document and the conventional data contents at the same time. When the document is opened, the word processing software does not need from-end-to-end re-typeset or re-layout but instead it can obtain the typeset content of each page in the document only by very simple calculation typeset taking a page as unit. The user can see the needed content and typeset style of the page immediately and perform operations of editing, modifying and so on at once. The object of increasing speed of opening a word processing document in the present invention is implemented. The core of the technical solution in the present invention is to perform reading processing of typeset information of a page for reading the pre-stored typeset information of the page when a word processing document is opened and quickly obtaining the typeset content of each page combining with the data content of the word processing document.

The typeset information is in principle the typeset information helpful to avoid re-typeset and re-layout when the word processing document is opened or perform normal operation and display only by performing very simple calculation in case the user would wait for a long time. Therefore, the typeset information is actually a set of relevant typeset data when the word processing document is under typeset. Further more, it is a set of data such as layout coordinate values, character locations, typeset directions and so on needed when all the levels from the pages to the paragraphs in the pages and even to the objects in the word processing document are under typeset.

It can be seen from the above technical solution of the present invention that the present invention directly stores the typeset information of a page which can only be obtained through calculation and typeset in prior art into the word processing document. When the document is opened and read once again, word processing software may obtain the typeset layout of the page by performing a quite small quantity of calculation only with regard to a destination page. Therefore, comparing with the prior art of performing calculation and typeset on the document from end to end, the present invention increases the speed of opening a document to a furthest extent, which effectively reduce the time of opening a document. Especially to the document with many contents and plentiful formatting information, such as a document with 1000 pages, the time of opening the document by the present invention is only equivalent to 1% of the time of opening by existing word processing software.

The present invention also has strong expansibility. By reading an ID identifying the paragraph and object while reading the paragraph information and object information, the paragraph and object with a dedicated ID in the document can be quickly read without performing reading and resolving from the beginning one by one. Further more, the ID identifying the paragraph and object is the same as the ID quoted by computer memory. Therefore, no pointer is needed to quote the data in the memory, which greatly increases the speed of opening a document.

The present invention will be described in more detail with reference to the drawings and embodiments.

### BRIEF DESCRIPTION OF THE DRAWINGS

Fig.1 is a flow chart illustrating the processing method for increasing the speed of opening a word processing document in accordance with the present invention;

Fig. 2 is a flow chart of reading the typeset information of a page of the word processing document in the present invention;

Fig. 3 is a flow chart of reading the information of the page header, the page footer and the column in the present invention;

Fig. 4 is a flow chart illustrating the column information reading processing in the present invention;

Fig. 5 is a flow chart of storing typeset information of a page of the word processing document;

Fig. 6 is a flow chart of storing the page header, page footer and column information of the word processing document;

Fig. 7 is a flow chart of store processing of the column information in the word processing document.

### DETAILED DESCRIPTION OF THE PREFERRED EMBODIMENTS

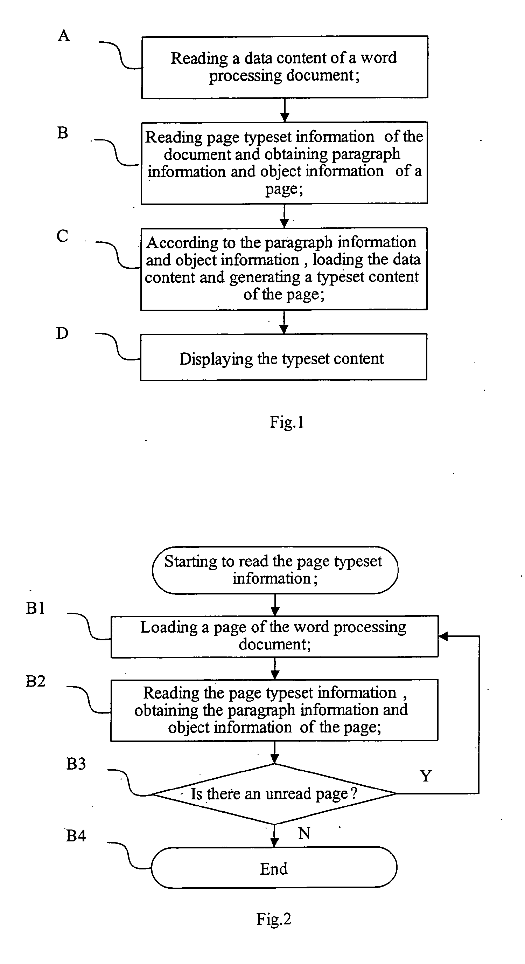

Fig.1 is a flow chart illustrating the processing method for increasing the speed of opening a word processing document in accordance with the present invention. The method includes following steps:

Step A, reading the data content of the word processing document;

Step B, reading typeset information of a page stored in the word processing document and obtaining the paragraph information and object information of the page;

Step C, according to the paragraph information and object information of the page, loading the data content of the page and generating the typeset content of the page; and

Step D, displaying the typeset content.

Under general circumstance, the data content in step A includes the content, the formatting information and other relevant information of the word processing document. As a matter of fact, the order of steps A and B is not critical. If the step B is set before the step A, the technical solution of the present invention can also be implemented. The object of the present invention means various objects participating in the typeset in the page, which includes all kinds of word or non-word contents in word processing such as various images, art letters, tables, optional graphics, diagrams, components and so on. Therefore, the typeset information of a page means a set of relevant page typeset data when the word processing document is under typeset. Specifically speaking, the typeset information refers to the data such as layout coordinate values, character locations, typeset directions and so on needed when all the levels from the pages to the paragraphs in the pages and even to the objects in the pages of the word processing document are under typeset. The typeset information is in principle the typeset information helpful to avoid re-typeset and re-layout when the word processing document is opened or perform normal display only by performing very simple calculation in case the user would wait for a long time.

By the following specific examples of typeset information of a page, the technical solution of the present invention is explained briefly. Provided that the word processing document has 200 pages and 300 paragraphs in all, the 100th page is taken as an analysis object.

Provided that the 50th character of the 150th paragraph is typeset at the bottom of the 99th page under page typeset, the 51 st character of the paragraph is supposed to be typeset at the first location of the 100th page. After the page typeset of the 100th page, the bottom of the page is typeset with the 10th character of the 170th paragraph. Therefore, the typeset information of the 100th page stores the following contents:

(1) the beginning location where the 51st character of the 150th paragraph is located in the 100th page;

(2) the information such as the typeset location where the data content behind the 51st character of the 150th paragraph is located in the 100th page, and the height and width;

(3) the beginning locations of the 151st paragraph ∼ the 170th paragraph in the page is the 0th character of each paragraph;

(4) the information such as the typeset location. height and width corresponding to the data content in the 151 st paragraph ∼ the 170th paragraph;

(5) the location taken up by various objects in the 100th page participating in the typeset in the page.

When the technical solution of the present invention is adopted to open the word processing document, the data content and the typeset information of a page of the word processing document are respectively read and the paragraph information and various object information of the page are obtained. For the paragraph information has already contained the information of beginning characters of the paragraph in the page, typeset locations, height and width corresponding to the data content in the paragraph and the information of locations, height and width of various objects in the page, the data contents of the page can be loaded by combining with the contents and formatting information of the word processing document according to the above information. The typeset contents of the page may be generated only by performing simple calculation and arrangement of the data contents, paragraphs and the typeset information of various objects in the page. Obviously, the process of calculation arrangement only refers to contents of the page instead of calculation typeset from-end-to-end as conventional techniques. Therefore, the present invention increases the speed of opening a document to a furthest extent so as to effectively reduce the time of opening the document and implement What You Need Is What You Realize effect of opening the document for the user. Further more, the technical solution of the present invention can completely implement quickly opening a word processing document by only displaying a designated page or only opening and displaying a designated page of the word processing document.

Fig. 2 is a flow chart of reading the typeset information of a page of the word processing document in the present invention. In one preferable technical solution of the present invention, the typeset information of the page may be read one by one or may be read independently according to a preset requirement. According to the requirement, the currently needed page information is firstly read and other currently not needed page information will be read according to the requirement in future. The specific steps are as follows:

Step B 1, loading a page of the word processing document;

Step B2, reading the typeset information of the page and obtaining the paragraph information and the object information of the page;

Step B3, judging whether there is an unloaded page, if there is an unloaded page, executing step B1; otherwise, executing step B4;

Step B4, ending the reading of the typeset information of the page.

In a further preferable technical solution in the present invention, between the steps B2 and B3, there may include a step B21 of reading the page header information of the page and the paragraph information and object information thereof. There may also include a step B22 of reading the page footer information of the page and the paragraph information and object information of the page. There may also include a step B23 of reading the column information of the page and the paragraph information and object information thereof. The steps B21, B22 and B23 make the read typeset information of the page more comprehensive. The participation of the page header, page footer and column of the page in the typeset makes the page content more comprehensive and the page typeset more plentiful.

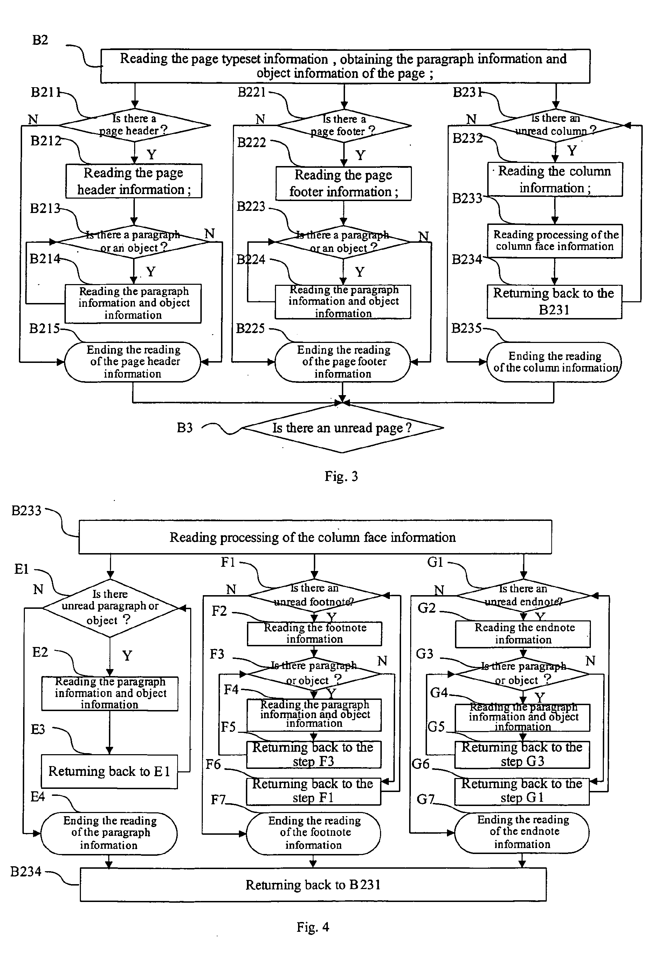

Fig. 3 is a flow chart of reading the information of the page header, the page footer and the column in the present invention.

As shown in Fig. 3, the reading of the page header information is specifically as follows:

Step B211, judging whether the page has a page header, if the page has no page header, executing step B215; otherwise, executing step B212;

Step B212, reading the page header information;

Step B213, judging whether there is paragraph information and object information, if there is no paragraph information or object information, executing step B215; otherwise, executing step B214;

Step B214, reading the paragraph information and object information, and returning back to the step B213;

Step B215, ending the reading of the page header information.

As shown in Fig. 3, the reading of the page footer information is specifically as follows:

Step B221, judging whether the page has a page footer, if there is no page footer, executing step B225; otherwise, executing step B222;

Step B222, reading the page footer information;

Step B223, judging whether there is paragraph information and object information, if there is no paragraph information and object information executing step B225; otherwise, executing step B224;

Step B224, reading the paragraph information and object information, and returning back to the step B223;

Step B225, ending the reading of the page footer information.

As shown in Fig. 3, the reading of the column information is specifically as follows:

Step B231, judging whether the page has unread column information, if the page has no unread column information executing step B235; otherwise, executing step B232;

Step B232, reading the column information;

Step B233, performing the reading processing of column information;

Step B234, executing step B231;

Step B235, ending the reading of the column information.

Fig. 4 is a flow chart illustrating the column information reading processing in the present invention. The column information reading processing in the step B233 includes the reading processing of the paragraph information and object information in the column, the reading processing of the footnote information in the column and the reading processing of the endnote information in the column.

As shown in Fig. 4, the reading processing of the paragraph information and object information in the column is specifically as follows:

Step E1, judging whether the column has unread paragraph information and object information, if the column has no unread paragraph information and object information, executing step E4; otherwise, executing step E2;

Step E2, reading the paragraph information and object information;

Step E3, returning back to the step E1;

Step E4, ending the reading of the paragraph information and object information.

As shown in the Fig. 4, the reading processing of the footnote information in the column is specifically as follows:

Step F1, judging whether the column has an unread footnote, if the column has no unread footnote executing step F7; otherwise, executing step F2;

Step F2, reading the footnote information;

Step F3, judging whether there is paragraph information and object information, if there is no paragraph information and object information, executing step F6; otherwise, executing step F4;

Step F4, reading the paragraph information and object information;

Step F5, returning back to the step F3;

Step F6, returning back to the step F1;

Step F7, ending the reading of the footnote information.

As shown in Fig. 4, the reading processing of the endnote information in the column is specifically as follows:

Step G1, judging whether the column has an unread endnote, if the column has no unread endnote, executing step G7; otherwise executing step G2;

Step G2, reading the endnote information;

Step G3, judging whether there is paragraph information and object information, if there is no paragraph information and object information executing step G6; otherwise, executing step G4;

Step G4, reading the paragraph information and object information;

Step G5, returning back to the step G3;

Step G6, returning back to the step G1;

Step G7, ending the reading of the endnote information;

The processing method for increasing the speed of opening a word processing document in the present invention has strong expansibility. When the typeset information of the word processing document is stored in XML format, the speed of opening a document may further be increased. Specifically speaking, in the above paragraph information and object information, each paragraph and object is defined with an ID attribute and an ID value. An index table document is established for the ID value. The key value in the index table document is the value of the ID attribute and the offset location of the corresponding paragraph and object in the XML file. Therefore, through the index table, the paragraph and object with a dedicated ID in the XML file can be quickly read and stored without performing reading and resolving from the beginning paragraph and object one by one. Therefore, the speed of opening a document can be greatly increased.

Further more, the unification of the computer memory ID and the ID defined for the paragraph and object may further enhance the performance of reading a file. During reading the computer memory, a document may have different storage location. Therefore, when other data quotes the data, it is needed to establish a directing link by using a pointer. When a file is loaded, because the data quantity is large and the quotation link is complicated, it may take a long time to establish the link resulting in a low speed of opening a document in the existing word processing software. The present invention configures that each loading of the file in the computer memory keeps using the defined ID stored in file so that the unique address or ID of the data object to be gotten by a program in the file and in the memory is kept the same. Therefore, when the file is loaded into the memory, there is no need to establish the quotation link so as to quickly open the document.

The above description has already clearly explained the technical solution of the present invention. When opening a word processing document, the present invention judges whether there is typeset information of word processing in the document according to the information in the document and reads the typeset information of the page and obtains the paragraph information and various object information of the page if there is the typeset information. The specific flow is to check whether there stores page header and page footer information in the page and read the page header and page footer information and the corresponding paragraph information and various object information of the next level if there stores the page header and page footer information. Secondly, the flow is to check whether there stores column information in the page and reads the column information if there stores the column information. The flow is to continue checking whether there is next-level typeset information of the column, that is column information and perform similar reading processing if there is the next-level typeset information. After the page processing is finished, the flow is to check whether there is an unread page and perform the reading processing in the same way of reading processing if there is an unread page. Such flow is repeated until finishing reading the typeset information of the page needing to be read in the word processing.

As a matter of fact, the typeset information read by the present invention may be stored in the word processing document in many ways. It will be explained briefly in one storage way. When the word processing document is stored, according to the requirement for the storage in the current word processing, the page information of the word processing typeset is obtained and the page information of the first page is stored. The specific flow is to check whether there is page header and page footer information needing to be stored in the page and store the corresponding page header and page footer information and the corresponding paragraph information and object information of the next level if there is the page header and page footer information. Secondly, the flow is to check whether there is column information in the page and store the column information if there is the column information. The flow is to continue checking whether there is next-level typeset information of the column, that is column information and perform similar storing processing if there is the next-level typeset information. After the first page processing is finished, the flow is to check whether there is a second page and perform the storing processing in the same way of storing processing if there is a second page. Such flow is repeated until finishing storing the typeset information of the page in the word processing.

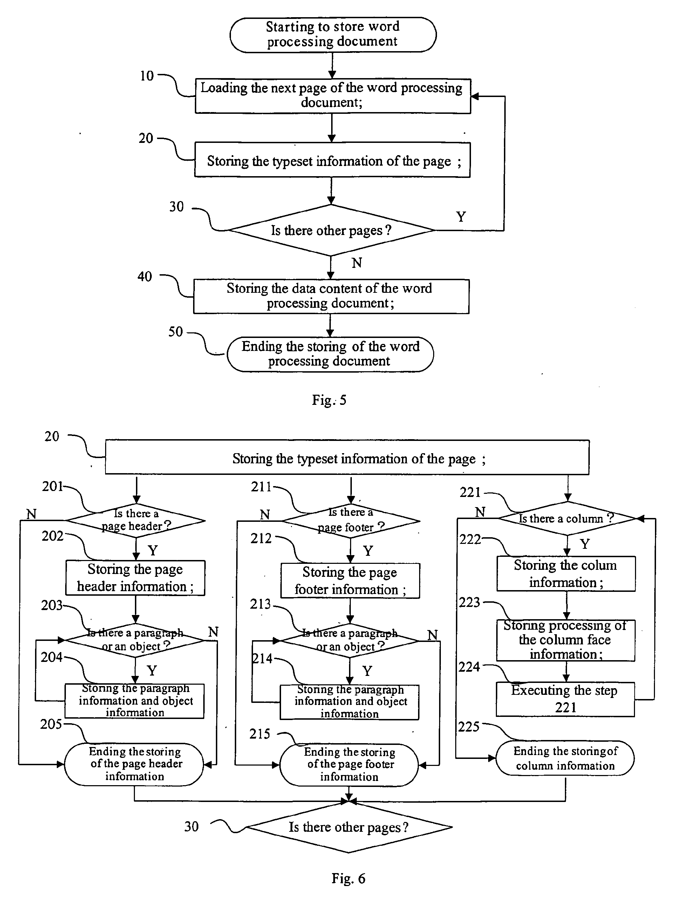

Fig. 5 is a flow chart of storing typeset information of a page of the word processing document, specifically including following steps:

Step 10, loading the next page of the word processing document;

Step 20, storing the typeset information of the page;

Step 30, judging whether there is other pages, if there is other pages, executing the step 10; otherwise, executing step 40;

Step 40, storing the data content of the word processing document;

Step 50, ending the storing of the word processing document.

Fig. 6 is a flow chart of storing the page header, page footer and column information of the word processing document. Between the step 20 and the step 30, there may includes a storing processing of page header information, a storing processing of page footer information and a storing processing of column information.

As shown in Fig. 6, the storing processing of page header information is specifically as follows:

Step 201, judging whether there is a page header, if there is no page header, executing step 205; otherwise, executing step 202;

Step 202, storing the page header information;

Step 203, judging whether there is paragraph information and object information, if there is no paragraph information and object information, executing step 205; otherwise, executing step 204;

Step 204, storing the paragraph information and object information, and returning back to the step 203;

Step 205, ending the storing of the page header information.

As shown in Fig. 6, the storing processing of page footer information is specifically as follows:

Step 211, judging whether there is a page footer, there is no page footer, executing step 215; otherwise, executing step 212;

Step 212, storing the page footer information;

Step 213, judging whether there is paragraph information and object information, if there is no paragraph information and object information, executing step 215; otherwise, executing step 214;

Step 214, storing the paragraph information and object information, and returning back to the step 213;

Step 215, ending the storing of the page footer information.

As shown in Fig. 6, the storing processing of column information is as follows:

Step 221, judging whether there is a column, if there is no column, executing step 225; otherwise, executing step 222;

Step 222, storing the column information;

Step 223, performing a storing processing of the column information;

Step 224, executing the step 221;

Step 225, ending the storing of column information.

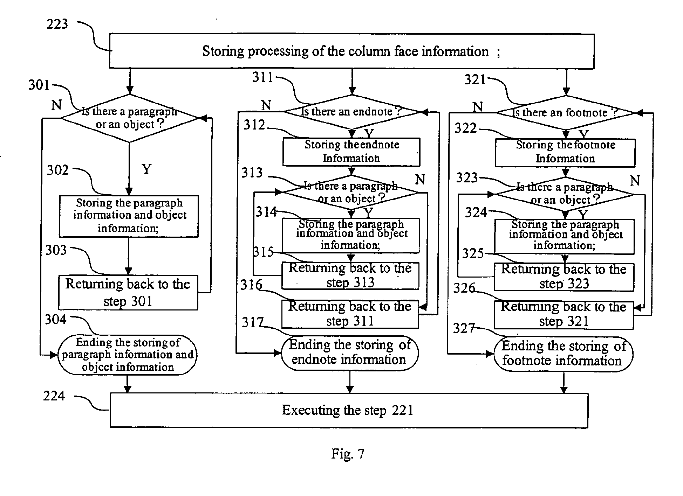

Fig. 7 is a flow chart of store processing of the column information in the word processing document. The storing processing of column information in the above step 223 means to store the typeset information in each column of each page of the word processing document, including storing processing of paragraph information and object information, endnote information and footnote information.

As shown in Fig. 7, the storing processing of the paragraph information and object information is specifically as follows:

Step 301, judging whether there is paragraph information and object information, if there is no paragraph information and object information, executing step 304; otherwise, executing step 302;

Step 302, storing the paragraph information and object information;

Step 303, returning back to the step 301;

Step 304, ending the storing of paragraph information and object information.

As shown in Fig. 7, the storing processing of endnote information is specifically as follows:

Step 311, judging whether there is an endnote, if there is no endnote, executing step 317; otherwise, executing step 312;

Step 312, storing the endnote information;

Step 313, judging whether there is paragraph information and object information, if there is no paragraph information and object information, executing step 316; otherwise, executing step 314;

Step 314, storing the paragraph information and object information;

Step 315, returning back to the step 313;

Step 316, returning back to the step 311;

Step 317, ending the storing of endnote information.

As shown in Fig. 7, the storing processing of footnote information is specifically as follows:

Step 321, judging whether there is a footnote, if there is no footnote, executing step 327; otherwise, executing step 322;

Step 322, storing the footnote information;

Step 323, judging whether there is paragraph information and object information, there is no paragraph information and object information, executing step 326; otherwise, executing step 324;

Step 324, storing the paragraph information and object information;

Step 325, returning back to the step 323;

Step 326, returning back to the step 321;

Step 327, ending the storing of the footnote information.

It is believed that, through introducing the above storing process of the typeset information of a page, the technical solution of the present invention can be further understood.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the spirit and scope of the present invention and covered in the claims of the present invention.

## Claims

1. A processing method for increasing speed of opening a word processing document, comprising:
step A, reading a data content of a word processing document;
step B, reading typeset information of a page stored in the word processing document and obtaining paragraph information and object information of the page;
step C, according to the paragraph information and object information of the page, loading the data content of the page and generating a typeset content of the page; and
step D, displaying the typeset content.

2. The method according to claim 1, wherein the step B specifically comprises:
step B 1, loading a page of the word processing document;
step B2, reading the typeset information of the page, obtaining the paragraph information and object information of the page;
step B3, judging whether there is an unread page, if there is an unread page, executing the step B 1; otherwise, executing step B4; and
step B4, ending.

3. The method according to claim 2, wherein between the steps B2 and B3 further comprising:
step B21, reading page header information of the page and the paragraph information and object information thereof.

4. The method according to claim 2, wherein between the steps B2 and B3 further comprising:
step B22, reading page footer information of the page and the paragraph information and object information thereof.

5. The method according to claim 2, wherein between the steps B2 and B3 further comprising:
step B23, reading column information of the page and the paragraph information and object information thereof.

6. The method according to claim 3, wherein the step B21 specifically comprises:
step B211, judging whether the page has a page header, if the page has no page header, executing step B 215; otherwise, executing step B212;
step B212, reading the page header information;
step B213, judging whether there is paragraph information and object information, if there is no paragraph information and object information, executing step B215; otherwise, executing step B214;
step B214, reading the paragraph information and object information, and returning back to the step B213; and
step B215, ending the reading of the page header information.

7. The method according to claim 4, wherein the step B22 specifically comprises:
step B221, judging whether the page has a page footer, if the page has no page footer, executing step B225; otherwise, executing step B222;
step B222, reading page footer information;
step B223, judging whether there is paragraph information and object information, if there is no paragraph information and object information, executing step B225; otherwise executing step B224;
step B224, reading the paragraph information and object information; and returning back to the step B223; and
step B225, ending the reading of the page footer information.

8. The method according to claim 5, wherein the step B23 specifically comprises:
step B231, judging whether the page has unread column information, if the page has no unread column information, executing step B235; otherwise, executing step B232;
step B232, reading the column information;
step B233, performing a reading processing of the column information;
step B234, executing the step B231; and
step B235, ending the reading of the column information.

9. The method according to claim 8, wherein the step B233 performing the reading processing of the column information specifically comprises:
step E1, judging whether the column has unread paragraph information and object information, if the column has no unread paragraph information and object information, executing step E4; otherwise, executing step E2;
step E2, reading the paragraph information and object information;
step E3, returning back to the step E1; and
step E4, ending the reading of the paragraph information and object information.

10. The method according to claim 8, wherein the step B233 performing the reading processing of footnote information in the column specifically comprises:
step F1, judging whether there is an unread footnote in the column, if there is no unread footnote, executing step F7; otherwise, executing step F2;
step F2, reading the footnote information;
step F3, judging whether there is paragraph information and object information, if there is no paragraph information and object information, executing step F6; otherwise, executing step F4;
step F4, reading the paragraph information and object information;
step F5, returning back to the step F3;
step F6, returning back to the step F1; and
step F7, ending the reading of the footnote information.

11. The method according to claim 8, wherein the step B233 performing the reading processing of endnote information in the column specifically comprises:
step G1, judging whether there is an unread endnote in the column, if there is no unread endnote, executing step G7; otherwise, executing step G2;
step G2, reading the endnote information;
step G3, judging there is paragraph information and object information, if there is no paragraph information and object information, executing step G6; otherwise, executing step G4;
step G4, reading the paragraph information and object information;
step G5, returning back to the step G3;
step G6, returning back to the step G1; and
step G7, ending the reading of the endnote information.

12. The method according to any one of claims 1 to 11, wherein while reading the paragraph information and object information, reading an ID identifying the paragraph and object.

13. The method according to claim 12, wherein the ID identifying the paragraph and object is the same as the ID quoted by computer memory.
